# EUROPEAN PATENT APPLICATION

(11) **EP 1 713 000 A1**
(43) Date of publication of application: **18.10.2006**
(21) Application number: 05290792.0
(22) Date of filing: 11.04.2005
(51) Int. Cl.: G06F 12/14

(54) **Memory protection system**

(71) Applicant: Jaluna SA, 78180 Montigny-le-Bretonneux (FR)
(72) Inventor: Boule, Ivan, 75011 Paris (FR); Lebée, Pierre, 60800 Crépy eu Valois (FR)
(74) Representative: Rummler, Felix

(57) **Abstract**

There is provided a memory protection system comprising: address storage means storing the start and end addresses of each of a plurality of memory segments; control data storage means storing control data indicative of a type of permitted access to each of the plurality of memory segments; comparison means for comparing said start and end addresses with addresses of a selected memory portion to which a processor seeks access; and combination means for logically combining access data indicative of the type of access sought by the processor to the selected memory portion with said control data; wherein the comparison and combination results are indicative of whether or not the access to the selected memory portion sought by the processor is allowable. The present invention provides for the access protection of memory segments of any required size, both large and small.

## Description

The present invention relates to a memory protection system and to a method of protecting memory from unauthorised access.

### Background Art

The provision of memory access protection in operating systems requires an underlying hardware mechanism. In conventional systems, such hardware mechanism involves a Memory Management Unit (MMUs) and/or a segmentation unit. The drawback of these mechanisms is that only large memory segments can be protected. This is because memory segments are addressed through a base address and a segment size. The segment size is a power of two value, and the base address must be aligned accordingly.

For example, Intel x86 processors employ a segmentation unit which allows for the addressing of 64 kbyte segments.

Generally, the minimum protectable segment size corresponds to the minimum granule size (power of two) of memory segments that can be addressed by the MMU. For example, if the minimum protectable memory segment size is one kbyte, but a smaller segment of (say) 22 bytes is to be protected, this requires the protection of a full one kilobyte segment (with 1002 bytes "wasted").

Accordingly, in conventional systems, the protection of memory segments is limited by two factors. First, the address length is limited (16 bit in Intel x86 architectures, for example), thereby limiting the maximum size of protectable memory segments. Second, the size of protectable memory segments is fixed in accordance with the addressing scheme employed by the CPU, resulting in potential memory wastage, as explained above. The minimum protectable size is never less than 1 kbyte. Thus, conventional systems are not adapted to adequately deal with the protection of memory segments of varying size.

Another drawback of conventional systems is that they usually require a cache, thereby preventing deterministic behaviour for real time applications.

There is thus a need for an improved system for managing the protection of memory segments. The present invention aims to address this need.

### Summary of Invention

According to one aspect of the invention, there is provided a memory protection system comprising: address storage means storing the start and end addresses of each of a plurality of memory segments; control data storage means storing control data indicative of a type of permitted access to each of the plurality of memory segments; comparison means for comparing said start and end addresses with addresses of a selected memory portion to which a processor seeks access; and combination means for logically combining access data indicative of the type of access sought by the processor to the selected memory portion with said control data; wherein the comparison and combination results are indicative of whether or not access to the selected memory portion sought by the processor is allowable.

Preferably, the address storage means comprises first and a second registers allocated to each of the plurality of memory segments, wherein the first register stores the start address of the allocated memory segment, and the second register stores the end address of the allocated memory segment. The comparison means may comprise a comparator allocated to each of the plurality of memory segments, each comparator being arranged to receive as input signals the start and end addresses of the allocated memory segment and the addresses of the selected memory portion. Each comparator is arranged to receive an output from the combination means as an additional input signal. Preferably, the comparators are arranged to perform comparison operations in parallel.

The invention can be implemented as a hardware mechanism in a simple manner. It requires no address translation, or a cache of page table entries to speed up virtual to physical memory address translation. Furthermore, it is fully deterministic. It can be easily interfaced with any modem microprocessor architecture. Also, it is simple to manage by Operating Systems.

The present invention enables protection of memory segments of any desired size without constraints. In particular, it is possible to protect segments to within the order of one byte, i.e. without constraints resulting from predetermined minimum segment (granule) sizes and base addresses. This is achieved by storing the start and end address (i.e. the first and last valid address) of each segment. Preferably, though, the minimum size of protectable memory segments corresponds to the maximum number of bytes which can be fetched/stored in a single cycle by the CPU.

In particular, by storing the start and end address of each segment, small segments down to the size of one byte can be protected. For example, a segment of 22 bytes can be protected without wasting physical memory. As a result, no physical memory is wasted. This is very useful in embedded applications having severe constraints on physical memory usage.

For example, the present invention can be used to protect the following types of memory segments:
text segments (storing application code),
private data segments,
text segments of a shared library,
shared data segments,
stacks of the currently executed task of an application.

According to another aspect of the invention, there is provided a method for protecting memory from unauthorised access, the method comprising: storing the start and end addresses of each of a plurality of memory segments; storing control data indicative of a type of permitted access to each of the plurality of memory segments; receiving a request to access a selected memory portion from a processor, wherein the request is represented by addresses of the selected memory portion and access data indicative of the type of access; comparing the start and end addresses with the addresses of the selected memory portion; logically combining the access data with the control data; and permitting the access to the selected memory portion depending on the comparison and combination results.

### Brief Description of the Drawings

Exemplary embodiments of the invention is described hereinbelow with reference to the drawings, of which:
Figure 1 illustrates a memory protection system in accordance with an embodiment of the invention; and
Figure 2 illustrates the steps of a method for protecting memory from unauthorised access in accordance with an embodiment of the invention.

### Detailed Description of an Embodiment

### Supervisor and User Mode

Memory protection becomes necessary because of the distinction between privileged execution mode (or supervisor mode) and non-privileged execution mode (or user mode). Some operations can only be performed in the supervisor mode, including modifying critical components of the CPU such as the interrupt mask and the execution mode itself, and executing privilege instructions.

The Operating System is considered a trusted entity and executed in privileged mode. In contrast, applications executed in the user mode require the protection of the memory which the application may attempt to access. In case of unauthorised access attempts, the CPU triggers an exception which is processed by the Operating System.

### Memory Protection Mechanism

According to an embodiment of the invention, the address space of a user mode application is split into a set of memory regions or segments. Each memory segment is protected by a hardware mechanism according to the type of its content (code, data).

When the memory protection mechanism is activated (typically in the CPU user mode), each attempted memory access by the CPU is verified by a set of hardware comparators associated with the memory segments. The comparators perform the following operations in parallel:
- checking if the address of the memory to which access is attempted is within the address range of one of the segments, and
- comparing the requested access type with the type of access allowed for the memory segment to be accessed.

The requested access is allowed if at least one of the outputs of comparators indicates that access is authorised. Otherwise, an error is notified to the CPU which in turn notifies the Operating system through a specific exception.

This will now be explained in more detail with reference to the drawings.

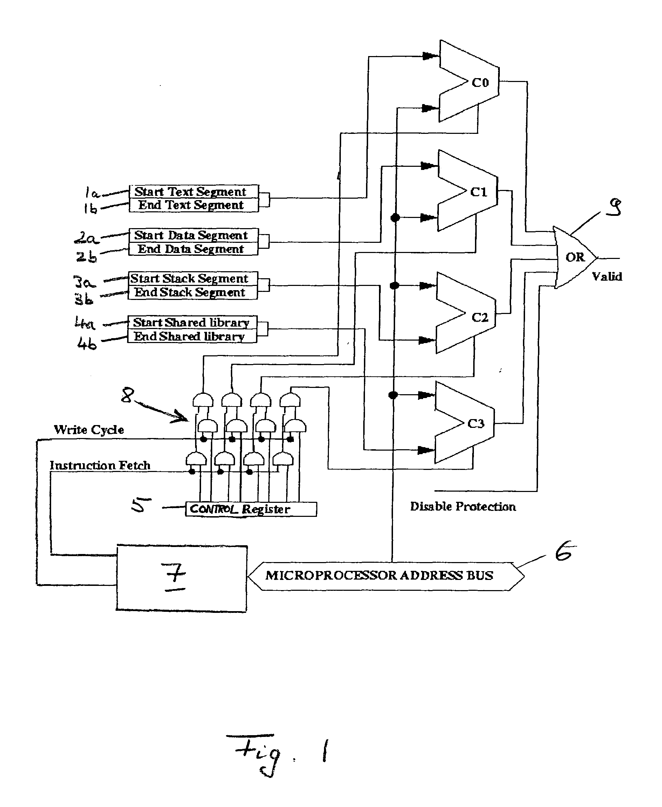

Fig. 1 illustrates a data processing system for the protection of memory segments in accordance with an embodiment of the present invention. In the illustrated embodiment, four memory segments are provided. Each segment is associated with first and second address registers 1a, 1b; 2a, 2b; 3a, 3b; 4a, 4b; respectively. That is, the first memory segment is associated with first and second address registers 1a, 1b, the second memory segment with first and second address registers 2a, 2b, and so on. The first address registers 1a, 2a, 3 a and 4a contain the start address (i.e. first valid address) of the respective associated memory segment. The second address registers 1b, 2b, 3b and 4b contain the end address (i.e. last valid address) of the respective associated memory segment.

A control register 5 is provided which contains a bit field of which respective portions are associated with each of the four memory segments. The bit field indicates the type of access allowed to each of the memory segments, for example "execute" access to a memory segment containing code, or "write" access to a memory segment containing data. By default all segments are at least readable.

The address registers 1-4 indicate different exemplary types of applications for which the four memory segments are used. That is, the first memory segment is used as a text segment, the second memory segment is used as a data segment, the third memory segment is used as a stack segment, and the fourth memory segment is used as a shared library. The type of application determines the type of access allowed to each of the segments. This, in turn, is reflected by the bit field in the control register 5.

Each memory segment is associated with a comparator C0, C1, C2, C3, respectively. The comparators C0, C1, C2, C3 perform a logical combination of their respective input signals in parallel. The combination result determines whether or not access to a memory segment may be allowed.

In particular, each comparator C0, C1, C2, C3 receives the start and end addresses of the associated one of the address registers 1,2,3,4, together with an address through a microprocessor address bus 6. The address on the microprocessor address bus 6 indicates the address of a memory portion a microprocessor 7 tries to access. This address is compared in parallel with the addresses stored in the address registers 1-4 in order to determine whether access to one (or more) of the four memory segments is sought.

In addition, each comparator receives the result of a logical combination of the bit field stored in the control register 5 with a "write cycle" and an "instruction fetch" signal from the microprocessor. The "write cycle" signal indicates whether a "write" access is sought by the microprocessor. The "instruction fetch" signal indicates whether an "execute" (instruction fetch) access is sought by the microprocessor. For example, the "write cycle" signal is high when the microprocessor requests a "write access", while the "instruction fetch" signal is low.

The logical combination is performed by gates 8. The logical combination result indicates whether or not access of the type requested is allowed.

For example, the microprocessor my attempt to perform a "write" access to the first memory segment. However, the bit field in the control register 5 that is associated with the first memory segment indicates that only "execute" access to the first memory segment is authorised. Consequently, the logical combination output of the gates 8 which is fed to the comparator C0 is low (for example), and thus the output of the comparator C0 is also low. In this example, the outputs of the other comparators C1, C2 and C3 are also low because no access to the second, third or fourth memory segment is requested, as indicated by the address on the microprocessor address bus 6.

Accordingly, in operation, the comparators C0, C1, C2, C3 can detect in parallel whether or not the current task is authorised to access a selected memory segment, for example in order to execute a current instruction or access a data pointer.

The outputs of the comparators C0, C1, C2 and C3 are combined by an OR gate 9. The OR gate further receives a "disable protection" signal which can override memory access protection, for example in order to execute trusted privilege routines (e.g. instructions from the operating system itself). Finally, the output of the OR gate 9 determines whether or not access to a requested memory segment is allowed.

### Initialisation

The memory protection registers (address registers 1-4, control register 5) can only be accessed in the supervisor mode by the Operating System. Before launching a non-trusted application in the user mode, the Operating System is responsible for initialising the memory protection registers. This includes writing the start and end addresses of the memory segments into the address registers 1-4, and also storing bit fields indicative of the authorised types of access to the memory segments depending on whether they are intended to store data or code, i.e. intended for "write" or "execute" access, respectively.

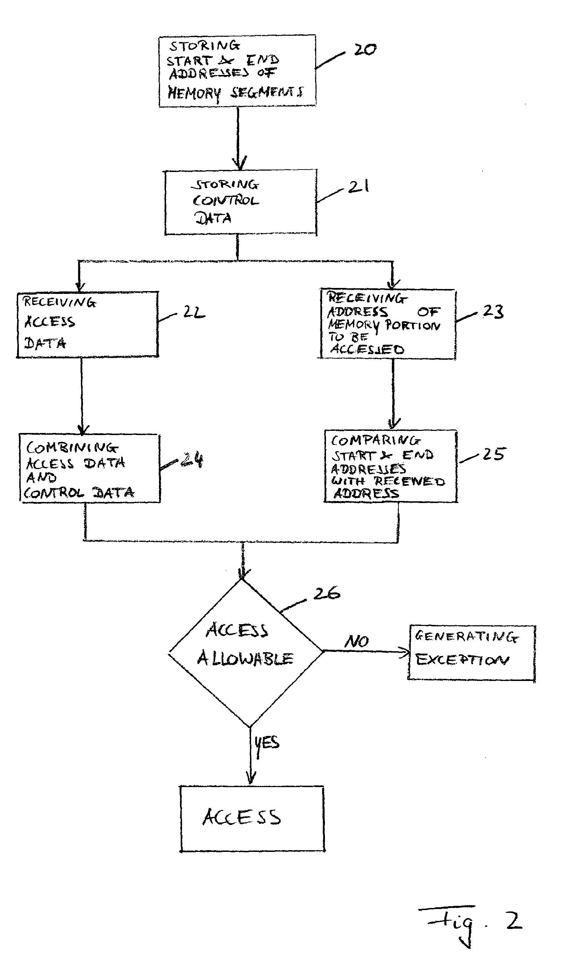

Fig. 2 illustrates the steps of a method for protecting memory from unauthorised access in accordance with an embodiment of the invention. In step 20, the start and end addresses of the memory segments are stored in the address registers 1-4 (Figure 1). In step 21, control data is stored in the control register 5. The control data represents the bit field explained in connection with Figure 1. Steps 20 and 21 are performed as part of the initialisation described above.

In steps 22 and 23, a request to access a selected memory portion is received from the processor 7. The access request is represented by access data indicative of the type of access requested, and by the start and end addresses of the memory portion the processor seeks to access.

In step 24, the access data is logically combined with the stored control data, thereby to determine whether the requested access is of a permitted type. In step 25, the stored start and end addresses of the memory segments are compared with the start and end addresses of the memory portion which the processor seeks to access.

The combination and comparison results determine whether or nor access to the selected memory portion is allowable. If the determination in step 26 is positive, then access is allowed. If it is negative, then an exception is generated and control handed over to the Operating System.

It should be noted that the invention is not limited to the above described exemplary embodiments and it will be evident to a skilled person in the art that various modifications may be made within the scope of protection as determined from the claims.

## Claims

1. Memory protection system comprising:
address storage means storing the start and end addresses of each of a plurality of memory segments;
control data storage means storing control data indicative of a type of permitted access to each of the plurality of memory segments;
comparison means for comparing said start and end addresses with addresses of a selected memory portion to which a processor seeks access; and
combination means for logically combining access data indicative of the type of access sought by the processor to the selected memory portion with said control data;
wherein the comparison and combination results are indicative of whether or not access to the selected memory portion sought by the processor is allowable.

2. The memory protection system of claim 1, wherein the address storage means comprises first and a second registers allocated to each of the plurality of memory segments, wherein the first register stores the start address of the allocated memory segment, and the second register stores the end address of the allocated memory segment.

3. The memory protection system of claim 1 or 2, wherein the comparison means comprises a comparator allocated to each of the plurality of memory segments, each comparator being arranged to receive as input signals the start and end addresses of the allocated memory segment and the addresses of the selected memory portion.

4. The memory protection system of claim 3, wherein each comparator is arranged to receive an output from the combination means as an additional input signal.

5. The memory protection system of claim 3 or 4, wherein the comparators are arranged to perform comparison operations in parallel.

6. The memory protection system of any of claims 3 to 5, further comprising an OR gate for combining the output signals of the comparators, wherein the output signal of the OR gate is indicative of whether or not access to the selected memory portion sought by the processor is allowable.

7. The memory protection system of claim 6, wherein the OR gate is arranged to receive a disable signal thereby to provide access to the selected memory portion regardless of the comparison and combination results.

8. The memory protection system of any preceding claim, wherein the types of permitted access include "execute" and "write" access.

9. Data processing system comprising:
a plurality of memory segments;
a processor; and
the memory protection system of any preceding claim.

10. The data processing system of claim 9, wherein the addresses of said selected memory portion are represented by an address signal on an address bus from the processor.

11. The data processing system of claim 9 or 10, wherein the combination means is arranged to receive said access data through write cycle and instruction fetch signals from the processor.

12. A method for protecting memory from unauthorised access, the method comprising:
storing the start and end addresses of each of a plurality of memory segments;
storing control data indicative of a type of permitted access to each of the plurality of memory segments;
receiving a request to access a selected memory portion from a processor, wherein the request is represented by addresses of the selected memory portion and access data indicative of the type of access;
comparing the start and end addresses with the addresses of the selected memory portion;
logically combining the access data with the control data; and
permitting the access to the selected memory portion depending on the comparison and combination results.

13. The method of claim 12, further comprising receiving a disable signal from the processor, thereby to permit access to the selected memory segment regardless of the comparison and combination results.
